# DEMANDE DE BREVET EUROPEEN

(11) **EP 2 145 664 A1**
(43) Date de publication de la demande: **20.01.2010**
(21) Numéro de dépôt: 09305615.8
(22) Date de dépôt: 29.06.2009
(51) Int. Cl.: B01D 53/00, B01D 5/00

(54) **Procédé et dispositif de récupération de chaleur et de piègeage de particules de composé organique volatile dans un flux d'air chaud**

(30) Priorité: 07.07.2008 FR 0854609
(71) Demandeur: RENAULT S.A.S., 92100 Boulogne Billancourt (FR)
(72) Inventeur: Potel, M. Alain, 78580, MAULE (FR); Pagno, M. Jean Laurent, 78760, JOUARS-PONTCHARTRAIN (FR)

(57) **Abrégé**

L'invention permet à la fois de récupérer de l'énergie issue d'une étuve de cuisson de peinture de carrosseries automobiles et également de récupérer des particules de composé organique volatil issu de ce même flux d'air chaud.

Il consiste à faire traverser ce flux d'air chaud (1) dans la partie supérieure d'un échangeur de chaleur du type à roue thermique (10) et à faire circuler à contre courant dans la partie inférieure de cette même roue thermique (10) un flux d'air neuf (5) refroidi pour récupérer des condensats (13).

Application aux cuissons de peinture de carrosseries automobiles sous étuves.

## Description

### Domaine de l'invention

L'invention concerne la récupération des émissions de composé organique volatil, communément appelé "COV", et de leur chaleur intrinsèque, générées par une cuisson dans une étuve.

L'invention s'applique, en particulier, au domaine de la peinture des carrosseries automobiles, notamment la peinture des tôles dans des étuves.

### Art antérieur et problème posé

La récupération de l'énergie dans le procédé industriel de peinture est une préoccupation actuelle, notamment dans le cadre de la peinture des carrosseries automobiles. En effet, le coût et les besoins en énergie sont en constante augmentation, parallèlement, on s'oblige à diminuer les rejets en composé organique volatil dans l'atmosphère et on est donc amené à rechercher des moyens de récupération d'énergie.

Différentes solutions actuelles permettent d'assurer le traitement de composé organique volatil par l'intermédiaire de l'utilisation d'incinérations d'effluents d'étuves, avec ou sans récupération d'énergie. Actuellement, seules les incinérations récupératrices d'énergie sont proposées lors des nouveaux projets ou pour de nouvelles installations de cuisson en étuve.

D'autre part, il est connu d'utiliser, dans le cadre des échangeurs de chaleur, le principe des roues thermiques pour récupérer de l'énergie dans un flux chargé. Si ce moyen permet de récupérer l'énergie des étuves, il a, cependant, un faible pouvoir de récupération des émissions de composé organique volatil, générées par la cuisson en étuve des peintures ou des mastics utilisés pour recouvrir les parties de carrosserie automobile.

Notamment, il est connu du document DE 43 33 792 un procédé de séparation de composés organiques provenant de l'enduction de tissu avec du caoutchouc et une installation de traitement des vapeurs produites lors de cette enduction. Les vapeurs sont condensées sur un échangeur de chaleur rotatif à axe horizontal. Le flux de gaz chargé de composés issus du caoutchouc est refroidi à contre courant par un flux d'air froid, jusqu'à obtenir, au niveau de l'échangeur, la température de condensation des composés précités.

Cependant, dans ce document, le procédé ne comporte pas de récupération des calories transmises au flux d'air frais au niveau de l'échangeur thermique.

Le but de l'invention est de remédier à l'ensemble des inconvénients ci-dessus en proposant de réaliser conjointement la récupération d'énergie et le traitement de l'air contenant le ou les composés organiques devant être rejetés dans l'atmosphère, notamment en utilisant une roue thermique.

### Résumé de l'invention

Un premier objet principal de l'invention est un procédé de récupération de chaleur ou de piégeage de particules de composé organique volatil dans un flux d'air chaud chargé en particules de composé organique volatil, issu d'une étuve de cuisson de tôlerie de véhicules automobiles.

Selon l'invention, le procédé consiste à :
- faire traverser le flux d'air chaud chargé en composé organique volatil dans un échangeur de chaleur, en l'introduisant sur la demi partie supérieure d'une des deux faces de l'échangeur de chaleur ; et
- faire traverser à contre-courant un flux d'air neuf en l'introduisant sur une demi partie inférieure d'une deuxième face de l'échangeur de chaleur, après avoir refroidi le flux d'air neuf, dans le but de récupérer par gravité les condensats sortant de l'échangeur de chaleur par la deuxième partie inférieure de la deuxième face de l'échangeur de chaleur.

Dans le procédé selon l'invention, il est prévu que l'échangeur de chaleur soit du type à roue thermique.

Dans ce cas, de préférence, la roue thermique tourne à une vitesse relativement lente pour échanger un maximum de calories, par exemple de l'ordre de trois tours par minute.

Un deuxième objet principal de l'invention est un dispositif de récupération de chaleur et de piégeage de particules de composé organique volatil utilisant le procédé précédemment énoncé.

Selon l'invention, le dispositif comprend :
- un échangeur de chaleur ;
- un canal supérieur pour la circulation d'air chaud chargé en composé organique volatil, placé de part et d'autre de la demi partie supérieure de l'échangeur de chaleur ;
- un canal inférieur pour la circulation du flux d'air neuf placé de part et d'autre de la demi partie inférieure de l'échangeur de chaleur ;
- des moyens de récupération des condensats, placés en dessous du canal inférieur ; et
- une batterie froide placée dans le canal inférieur, en amont de l'échangeur de chaleur, lesdits moyens de récupération des condensats étant placés entre l'échangeur de chaleur et la batterie froide.

Il est prévu que l'échangeur de chaleur soit une roue thermique à axe de rotation horizontal.

Dans ce cas, la roue thermique est avantageusement constituée de matériaux conducteurs de la chaleur.

De préférence, ledit matériau conducteur est un film métallique ondulé avec une surface d'échange importante.

### Description détaillée d'une réalisation de l'invention

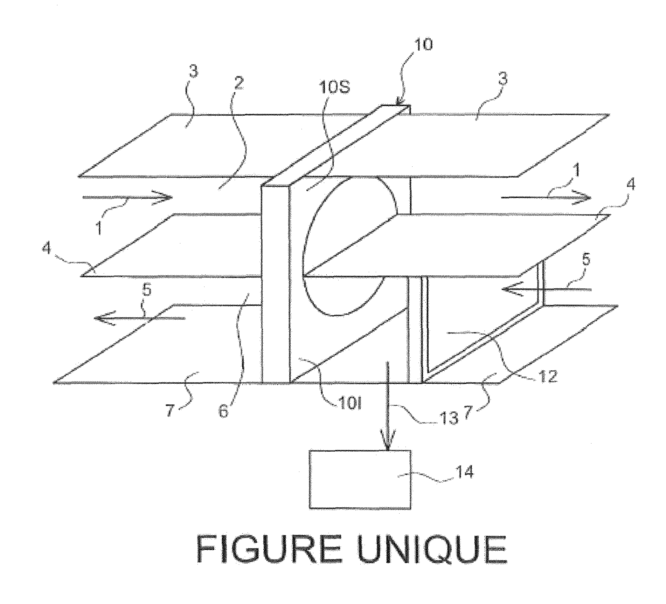

L'invention et ses caractéristiques techniques seront mieux comprises à la lecture de la description suivante, qui est accompagnée d'une figure unique représentant donc le dispositif selon l'invention.

Sur la figure unique, on distingue deux paires de flèches. Une première paire de flèches, symbolise un flux d'air, allant de gauche à droite sur la figure, et qui est un flux d'air chaud chargé en composé organique volatil 1, notamment issu d'une étuve de cuisson de tôlerie de véhicules automobiles. Ce flux d'air chargé en composé organique volatil 1 est canalisé dans un canal supérieur 2, délimité symboliquement par deux tôles supérieures 3 et deux tôles mitoyennes 4, placées en dessous des tôles supérieures 3.

En correspondance, la deuxième paire de flèches symbolise un flux d'air neuf 5 circulant de droite à gauche sur cette figure, c'est-à-dire à contre-courant du flux d'air chaud chargé en composé organique volatil 1. Ce flux d'air neuf circule dans un canal inférieur 6, représenté symboliquement par les deux tôles mitoyennes 4 et deux tôles inférieures 6 placées en dessous des deux tôles mitoyennes 4.

Entre les deux tôles supérieures 3, les deux tôles mitoyennes 4 et les deux tôles inférieures 7 se trouve une roue thermique 10 équipée de son cadre. La roue thermique 10 est à axe horizontal et est constituée de matériaux conducteurs de la chaleur, par exemple un film ondulé avec une surface d'échange importante. Les deux tôles mitoyennes 4 définissent donc non seulement le canal supérieur 2 et le canal inférieur 6, mais obligent les deux flux à traverser respectivement une partie supérieure 10S de la roue thermique 10 pour le flux d'air chaud chargé en composé organique volatil 1 et une partie inférieure 10I pour le flux d'air neuf 5. De plus, en amont de la partie inférieure 10I de la roue thermique 10 se trouve avantageusement une batterie froide 12 ou batterie de réfrigération destinée à rafraîchir l'air neuf du flux d'air neuf 5.

Dans le canal inférieur 6 de flux d'air neuf, de préférence entre la roue thermique 10 et la batterie froide 12, se trouvent des moyens de récupération des condensats 14 qui tombent par gravité en sortant par la partie inférieure 10I de la roue thermique 10, sur la face du côté de la batterie froide 12. Les solvants ou condensats récupérés le sont sous forme liquide et peuvent être ensuite dirigés vers un bac de décantation ou récupérés dans des fûts. La chute des condensats est symbolisée par la flèche verticale 13.

A titre d'exemple, l'air extrait d'une étuve de cuisson de carrosseries automobiles est à une température de l'ordre de 150° et est chargé de solvant sous forme gazeuse. Il constitue donc le flux d'air chaud chargé en composé organique volatil 1 de la figure unique.

La roue thermique 10 est constituée de matériaux conducteurs, par exemple un film métallique ondulé avec une surface d'échange importante. Elle est séparée en deux secteurs. Une entrée de flux froid, à savoir le flux d'air neuf 5 et une sortie de flux chaud chargé en composé organique volatil 1. Elle est donc utilisée pour récupérer des calories du flux chaud chargé en composé organique volatil 1. La roue thermique 10 tourne à une vitesse relativement lente pour échanger un maximum de calories, par exemple une vitesse de l'ordre de trois tours par minute. Le flux d'air neuf 5 est à la température extérieure et traverse en premier la batterie froide 12 qui le refroidit. Il pénètre ensuite dans la partie inférieure 10I de la roue thermique 10 et participe à un échange d'une grande partie de chaleur emmagasinée dans la roue thermique 10. Cette dernière permet donc une récupération en continu des calories contenues dans le flux d'air chaud chargé en composé organique volatil 1.

Une telle installation peut avoir un gain de température du flux d'air neuf 5 d'environ 90°C. Dans le cas où la roue thermique 10 est installée sur un circuit d'air non incinéré, les composés organiques volatils sous forme gazeuse sont condensés. Cette quantité peut être estimée à 40 %, si on n'utilise pas de batterie froide 12 à l'entrée du flux d'air neuf 1. Ce pourcentage de récupération d'énergie peut être augmenté, grâce à la batterie d'air froide 12.

Une telle installation peut permettre un gain calorifique estimé sur le chauffage d'une étuve de 600 kWh pour une extraction de 20 000 m²/h. La consommation électrique de la batterie froide 12 est de 50 kWh. Concernant le gain sur le relevé des composés organiques volatils, celui-ci peut être de l'ordre de 200 à 300 g par véhicule.

Par ailleurs, dans le dispositif décrit ci-dessus, il n'y a pas, en aval de l'échangeur de chaleur, de mélange entre l'air froid ayant été réchauffé par le passage sur l'échangeur et l'air initialement chargé en composés organiques et qui a été refroidi sur l'échangeur. Le fait de ne pas avoir de mélange en sortie évite, notamment, les problèmes liés à la re-vaporisation.

De même, le gaz refroidi réchauffé après passage sur l'échangeur de chaleur est utilisé comme comburant et/ou pour le chauffage de l'étuve. La température de l'air entrant dans l'étuve étant plus élevée, il en résulte un gain d'énergie qui existe même lorsque l'air frais entrant est refroidi en amont de l'échangeur de chaleur.

L'invention permet donc de récupérer de l'énergie issue de l'énergie sortant de l'étuve de cuisson de carrosseries automobiles, mais également de récupérer les émissions de composé organique volatil, notamment gazeuses, en les transformant en grande partie sous la forme de condensats plus ou moins liquides. Cette solution ne permet pas de supprimer totalement tous les solvants dégagés par l'étuve, mais contribue largement à réduire le pourcentage de composés organiques volatils dans les usines de peinture de carrosseries automobiles et également contribue à réduire les émissions de gaz à effet de serre.

## Revendications

1. Procédé de récupération de chaleur et de piégeage de particules de composés organiques volatils dans un flux d'air chaud chargé en particules de composé organique volatil, issu d'une étuve de cuisson de tôlerie de véhicules automobiles,
**caractérisé en ce qu'**il consiste à :
- faire traverser le flux d'air chaud chargé en composé organique volatil (1) dans un échangeur de chaleur (10), en l'introduisant sur la demi partie supérieure (10S) d'une des deux faces de l'échangeur de chaleur (10) ; et
- faire traverser à contre-courant un flux d'air neuf (5) en l'introduisant sur une demi partie inférieure (10I) d'une deuxième face de l'échangeur de chaleur (10), après avoir refroidi le flux d'air neuf (5), dans le but de récupérer par gravité les condensats sortant de l'échangeur de chaleur (10) par la deuxième partie inférieure (10I) de la deuxième face de l'échangeur de chaleur (10).

2. Procédé selon la revendication 1,
**caractérisé en ce que** l'échangeur de chaleur est du type à roue thermique (10).

3. Procédé selon la revendication 2,
**caractérisé en ce que** la roue thermique (10) tourne à une vitesse de l'ordre de trois tours par minute.

4. Dispositif de récupération de chaleur et de piégeage de particules de composé organique volatil dans un flux d'air chaud, issu d'une étuve de cuisson de tôlerie de véhicules automobiles, pour la mise en oeuvre du procédé selon l'une quelconque des revendications précédentes, **caractérisé en ce qu'**il comprend :
- un échangeur de chaleur (10) ;
- un canal supérieur (2) pour la circulation du flux d'air chaud chargé en composé organique volatil (1), placé de part et d'autre de la demi partie supérieure (10S) de l'échangeur de chaleur (10) ;
- un canal inférieur (6) pour la circulation du flux d'air neuf (5) placé de part et d'autre de la demi partie inférieure (10I) de l'échangeur de chaleur (10) ;
- des moyens de récupération des condensats (14), placés en dessous du canal inférieur (6) ; et
- une batterie froide (12) placée dans le canal inférieur (6), en amont de l'échangeur de chaleur (10), lesdits moyens de récupération des condensats (14) étant placés entre l'échangeur de chaleur (10) et la batterie froide (12).

5. Dispositif selon la revendication 4,
**caractérisé en ce que** l'échangeur de chaleur est une roue thermique (10) à axe de rotation horizontal.

6. Dispositif selon la revendication 5,
**caractérisé en ce que** la roue thermique (10) est constituée de matériaux conducteurs de la chaleur.

7. Dispositif selon la revendication 6,
**caractérisé en ce que** ledit matériau conducteur est un film métallique ondulé avec une surface d'échange importante.
